Europäisches Patentamt

European Patent Office

Office européen des brevets

(11) Veröffentlichungsnummer: **0 126 462**
**A1**

(12) # EUROPÄISCHE PATENTANMELDUNG

(21) Anmeldenummer: **84105706.0**

(22) Anmeldetag: **18.05.84**

(51) Int. Cl.³: **F 02 B 37/00**, F 02 B 41/06

(30) Priorität: **18.05.83 DE 3318136**

(43) Veröffentlichungstag der Anmeldung: **28.11.84**
**Patentblatt 84/48**

(84) Benannte Vertragsstaaten: **DE FR GB IT SE**

(71) Anmelder: **Schatz, Oskar, Dr.-Ing., Waldpromenade 16, D-8035 Gauting (DE)**

(72) Erfinder: **Schatz, Oskar, Dr.-Ing., Waldpromenade 16, D-8035 Gauting (DE)**

(74) Vertreter: **Lamprecht, Helmut, Dipl.-Ing., Corneliusstrasse 42, D-8000 München 5 (DE)**

(54) **Verdrängerlader für die Verdichtung von Luft durch die Abgase eines Verbrennungsmotors.**

(57) Ein Verdrängerlader für die Verdichtung von Luft durch die Abgase eines Verbrennungsmotors, insbesondere eines Kolbenmotors, besitzt mindestens eine Abgaskammer mit einem Ein- und einem Auslass und mindestens eine Luftkammer, die durch eine sie begrenzende, bewegliche Trennwand in ihrem Volumen veränderbar sind, wobei zwei Trennwände zu gemeinsamer Bewegung miteinander verbunden sind.

EP 0 126 462 A1

- 1 -

Dr.-Ing. Oskar Schatz

D - 8035 Gauting

## Verdrängerlader für die Verdichtung von Luft durch die Abgase eines Verbrennungsmotors

Die Erfindung betrifft einen Verdrängerlader für die Verdichtung von Luft durch die Abgase eines Verbrennungsmotors, insbesondere eines Kolbenmotors, mit mindestens je einer in ihrem Volumen durch eine sie begrenzende, bewegliche Trennwand veränderbaren, jeweils einen Ein- und einen Auslaß aufweisenden Abgaskammer und Luftkammer.

Durch Abgas antreibbare Verdrängerlader sind theoretisch bekannt. Die Nutzung der periodisch aus dem jeweiligen Motorzylinder austretenden Abgasenergie stößt jedoch in vielen Fällen auf Schwierigkeiten.

0126462

Insbesondere in Vielzylindermotoren behindern sich die Abgaswellen der einzelnen Motorzylinder gegenseitig, so daß für die Bewegung der Trennwand durch die natürlichen Abgaswellen mit zunehmender Zylinderzahl immer weniger nutzbares Energiegefälle zur Verfügung steht. Ein ähnlicher Effekt tritt bei erhöhter Motordrehzahl auf.

Für verschiedene, insbesondere neu entwickelte Verfahren zur energiesparenden Ladung von Verbrennungsmotoren ist es vorteilhaft oder sogar unumgänglich, Verdrängerlader einzusetzen. Es besteht deshalb ein Bedarf an vielseitig einsetzbaren Verdrängerladern, welche auch bei Motoren mit hoher Zylinderzahl bzw. hoher Nenndrehzahl wirkungsvoll eingesetzt werden können.

Der Erfindung liegt die Aufgabe zugrunde, einen Verdrängerlader der eingangs genannten Art so auszugestalten, daß er vielseitig einsetzbar und insbesondere auch bei Motoren mit hoher Zylinderzahl oder hoher Nenndrehzahl für die Realisierung energiesparender neuer Verfahren und Vorrichtungen einsetzbar ist.

Die Lösung dieser Aufgabe besteht darin, daß der Lader zu gemeinsamer Bewegung verbundene Trennwände aufweist. Damit besteht die Möglichkeit, den Lader

- 3 -

0126462

mit zwei in jeweils entgegengesetzter Richtung mit Abgas zu beaufschlagenden Abgaskammern zu versehen, wobei man die zum Betrieb des Laders mit Abgas eingesetzten Motorzylinder in zwei Gruppen beiden Abgaskammern zuordnet. Dadurch wird die Frequenz der in einer Abgaskammer wirksamen Druckimpulse halbiert und das nutzbare Energiegefälle entsprechend verbessert, insbesondere hinsichtlich der Nutzung der energiereichen natürlichen Abgasimpulse von Verbrennungsmotoren. Eine besonders vorteilhafte Ausgestaltung besteht darin, daß der Lader zwei Abgaskammern aufweist, die zu beiden Seiten einer Trennwand angeordnet sind. Dadurch kann eine sehr wirksame Trennung des Abgasbereichs vom Luftbereich erzielt werden.

Eine weitere vorteilhafte Ausführungsform besteht darin, daß die Trennwände mit einer aus den Kammern herausgeführten Führungsstange versehen sind, die außerhalb der Kammern in der Bewegungsrichtung der Trennwände geführt ist, wobei Führungsspiel und Führungslänge so bemessen sind, daß eine als Kolben ausgebildete Trennwand berührungsfrei in der ihr zugeordneten Kammer bewegbar ist. Damit können die Reibungsverluste auf ein Minimum reduziert werden, zumal durch die Trennung der Abgaskammern von der oder den Luftkammern auch dann eine Vermischung von Abgas und Ladeluft nicht zu befürchten ist, wenn die Abdichtung der zu beiden Seiten des Kolbens befind-

0126462

lichen Kammern allein durch die geringe Spaltbreite zwischen dem Kolben und der benachbarten Kammerwandung erfolgt.

Die zu gemeinsamer Bewegung miteinander verbundenen Trennwände können fest miteinander verbunden sein oder ihre Bewegung kann über eine Synchronisationseinrichtung aufeinander abgestimmt sein.

Eine andere vorteilhafte Ausbildung besteht darin, daß die Trennwandstirnfläche für Ladeluftammer und Abgaskammer unterschiedlich groß ausgebildet ist. Ist die dem Abgas zugewandte Stirnfläche größer, kann man einen hohen Ladedruck erreichen; ist die der Ladeluft zugewandte Stirnfläche größer, kann man ein großes Luftfördervolumen erhalten.

Eine vorteilhafte Ausgestaltung besteht auch darin, daß zwei zu gemeinsamer Bewegung miteinander verbundene Trennwände über eine Vorrichtung miteinander verbunden sind, die geeignet ist, die Bewegung der einen Trennwand jeweils gegenläufig auf die andere Trennwand zu übertragen, wodurch ein Ausgleich der Massenkräfte stattfindet. Die Vorrichtung zur Bewegungsübertragung kann mechanisch oder hydraulisch betätigbar sein.

0126462

Eine besonders vorteilhafte Ausgestaltung besteht darin, daß der Lader zwei Abgaskammern und zwei Ladeluftkammern aufweist, wobei der Auslaß der ersten Ladeluftkammer über einen Kühler mit dem Einlaß der zweiten Ladeluftkammer und deren Auslaß mit dem Einlaß des zu ladenden Motozylinders verbunden ist. Damit kann die zunächst verdichtete Luft Entspannungsarbeit an den Lader abgeben und zugleich durch die durch Kühlung und Entspannung abgekühlte Ladeluft die Motorleistung verbessert werden.

Falls die Anordnung von zwei Abgaskammern noch nicht für einen wirkungsvollen Laderbetrieb ausreicht, kann man jedem Abgasauslaß eine Drossel, gegebenenfalls auch eine hinsichtlich Druck und/oder Dauer der Drosselung einstellbare Drossel zuordnen, um die Abgasimpulse zu optimieren. Man kann hierzu auch den Abgaseinlaß und/oder -auslaß mit einem steuerbaren Ventil versehen.

Eine weitere Variante besteht darin, daß dem Abgaseinlaß ein Abgassammler vorgeschaltet und die Abgasseite des Laders mit einer Taktsteuerung versehen ist. Diese Taktsteuerung kann von einem Regler ausgehen, der beispielsweise die Betriebskennwerte und -daten des Gesamtsystems berücksichtigt. Die Taktsteuerung der Abgasseite des Laders kann aber auch durch die natürlichen Abgasimpulse des Motors oder durch eine Verbindung mit dem Motor ausgelöst werden.

0126462

Weitere vorteilhafte Ausgestaltungen ergeben sich aus den Unteransprüchen in Verbindung mit der nun folgenden Beschreibung.

Anhand der Beschreibung der in der Zeichnung dargestellten Ausführungsbeispiele der Erfindung wird diese näher erläutert.

Es zeigt:

Fig. 1  in schematischer Darstellung einen erfindungsgemäßen Verdrängerlader in Verbindung mit einem Vierzylinder-Verbrennungskolbenmotor,

Fig. 2  die schematische Darstellung eines Doppelkolbenladers mit unterschiedlich großen Kolbenflächen für Abgas und Luft und

Fig. 3  eine Ausführungsform des Verdrängerladers mit einer Vorrichtung zum Massenausgleich.

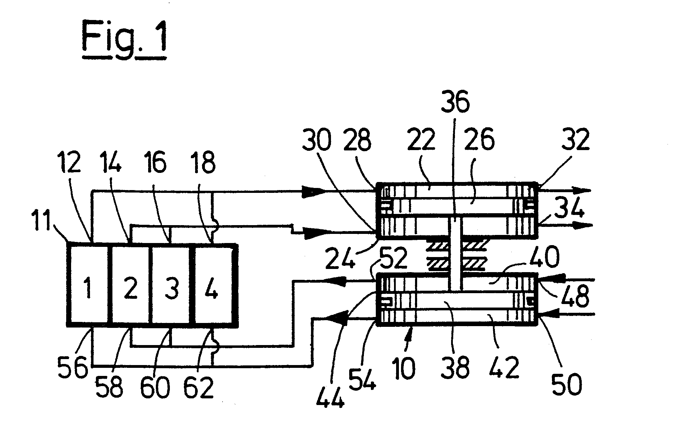

In Fig. 1 ist als Taktgeber für einen Verdrängerlader 10 ein Vierzylindermotor 11 dargestellt, dessen vier Zylinder 1, 2, 3 und 4 jeweils mit Auslaßventilen 12, 14, 16 und 18 versehen sind. Falls sie in einen gemeinsamen Auspuffstrang münden würden, könnte die gegenseitige Beeinflussung der erzeugten Druckwellen durch das Öffnen der Zylinderauslaßventile 12 - 18 gegebenenfalls zu groß werden, um noch genügend Energie für den Betrieb des Laders 10 übrig zu las-

- 7 -

0126462

sen. Es sind deshalb am Lader 10 zwei Abgaskammern 22 und 24 vorgesehen, die durch eine bewegliche Trennwand 26 voneinander getrennt sind. Jede Abgaskammer 22 und 24 weist je einen Abgaseinlaß 28 bzw. 30 und einen Abgasauslaß 32 bzw. 34 auf. Die Auslaßventile 12 - 18 sind paarweise den beiden Abgaskammern 22 und 24 zugeordnet, und zwar die Auslaßventile 12 und 18 der Abgaskammer 22 und die Auslaßventile 14 und 16 der Abgaskammer 24. Die Trennwand 26 ist über eine Kolbenstange 36 mit einer zweiten Trennwand 38 nach Art eines Doppelkolbens zu gemeinsamer, gleichsinniger Bewegung verbunden. Die Kolbenstange 36 ist außerhalb der Abgaskammer und eines mindestens eine Ladeluftkammer 40 aufweisenden Laderabschnitts 44 bei 46 axial beweglich geführt.

Im Laderabschnitt 44 ist die zweite Trennwand 38 angeordnet und trennt dort beim gezeigten Beispiel zwei Ladeluftkammern 40 und 42. Jede Ladeluftkammer ist mit einem Ladelufteinlaß 48 bzw. 50 und einem Ladeluftauslaß 52 bzw. 54 versehen. Die Ladeluftauslässe sind wie die Abgaseinlässe 28 und 38 auf die vier Motorzylinder so verteilt, daß die Verhältnisse des Laderbetriebs zwei Zweizylindermotoren entsprechen, die aus den jeweils paarweise zusammengefaßten Zylindern 1 und 4 bzw. 2 und 3 bestehen.

0126462

Gemäß dem Stand der Technik werden Vierzylinder-Viertakt-Reihenmotoren aus Gründen des Massenausgleichs und zur Erzielung gleichmäßiger Zündabstände der einzelnen Zylinder so ausgeführt, daß die Kolben der beiden außenliegenden Zylinder 1 und 4 mit gleichem Kurbelwinkel an der Kurbelwelle des Motors angeordnet sind, während die beiden innenliegenden Zylinder 2 und 3 um 180° versetzt sind. Somit bewegen sich die außenliegenden Kolben jeweils in derselben Richtung, während sich die innenliegenden Kolben genau entgegengesetzt bewegen. Der Zündabstand zwischen den beiden innenliegenden Zylindern 2 und 3 bzw. den beiden außenliegenden Zylindern 1 und 4 beträgt jeweils 360° Kurbelwinkel. Dadurch ergibt sich insgesamt eine gleichmäßige Zündfolge der vier Motorzylinder von 180° Kurbelwinkel. Durchlaufen z. B. die beiden außenliegenden Kolben gerade den unteren Totpunkt, dann durchlaufe zum gleichen Zeitpunkt die innenliegenden Kolben den oberen Totpunkt. Zu diesem Zeitpunkt ist wegen der sog. Ventilüberschneidung das Einlaßventil des einen außenliegenden Zylinders noch offen, während das Auslaßventil des anderen außenliegenden Zylinders gerade geöffnet ist.

Die durch den Abgasstoß aus den Zylindern 1 oder 4 aus der Ladeluftkammer 42 verdrängte Luft wird wieder den Zylindern 4 und 1 über die Einlaßventie 62 bzw. 56 zugeführt während die durch den Abgasstoß aus den Zylindern 2 oder 3 aus der Ladeluftkammer 40 verdrängte Luft über die Einlaßventile 60 und 58 in die Zylinder 3 und 2 gelangt.

Entsprechend den oben geschilderten Verhältnissen beim Vierzylinder-Motor wird der Zylinder, dessen Auslaßventil geöffnet ist, die Luft durch den Abgasstoß jeweils in den Zylinder befördern, dessen Einlaßventil zum gleichen Zeitpunkt geöffnet ist, ohne daß hierzu ein besonderer Taktgeber erforderlich ist. Hierdurch wird die energiesparende direkte Ladung der Motorzylinder aus dem Lader möglich, d. h. die Verdichtung der Ladeluft während des Einströmens in den Motor vorzugsweise gegen Ende des Saughubs. Bei den bekannten Verfahren der sog. Aufladung und der sog. Nachladung wird die verdichtete Luft zuerst in einen Speicher ausgeschoben und strömt von dort in den Motor.

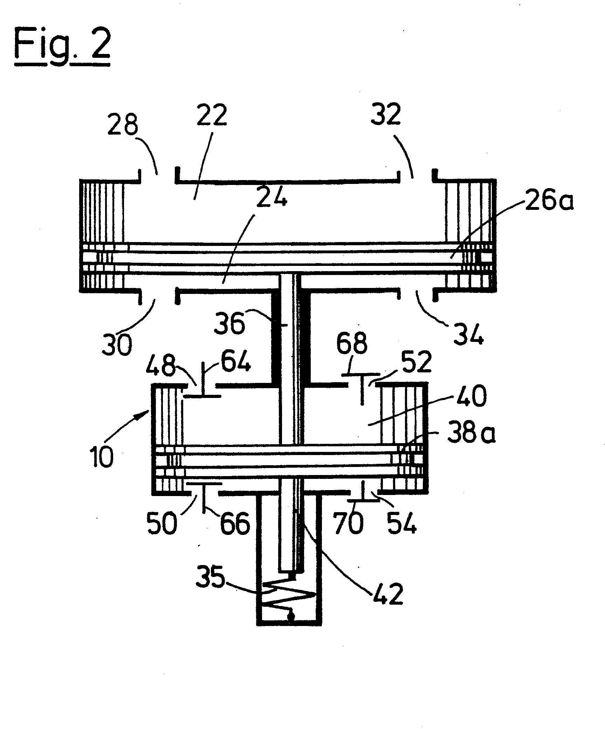

Die Fig. 2 zeigt den Doppelkolbenlader 10 etwas deutlicher, wobei zugleich die Möglichkeit gezeigt wird, durch unterschiedlich große wirksame Flächen der beiden Trennwände 26a bzw. 38a besondere Wirkungen nach den jeweiligen Verhältnissen zu erzielen. In Fig. 2 ist die Trennwand 26a der Abgasseite des Laders 10 größer als die Trennwand 38a der Ladeluftseite. Dies hat zur Folge, daß ein besonders hoher Ladedruck erreicht werden kann. Würde man das Größen-

0126462

verhältnis umkehren, also die Trennwand 38a größer ausbilden als die Trennwand 26a, so könnte man ein besonders großes Luftfördervolumen erhalten.

In Fig. 2 sind außerdem die an den Ladelufteinlässen 48 und 50 und -auslässen 52 und 54 vorgesehenen Rückschlagklappen 64, 66 bzw. 68 und 70 dargestellt. Die auf die Führungsstange 42 wirkende Feder 35 ist beispielhaft auf Zug und Druck beanspruchbar und hat hier die Tendenz, die zu gemeinsamer Bewegung verbundenen Trennwände 26a, 38a in ihrer Mittelage zwischen den beiden Endpositionen für die Hubbewegung zu halten. Die Charakteristik der Feder 35 ist der jeweiligen Aufgabenstellung angepaßt. Sie kann insbesondere bei Annäherung der beiden Trennwände an ihre Endposition stark progressiv im Sinne eines Puffers ausgebildet sein, um den Hub des Laders und damit die Fördermenge an die Intensität der Abgasimpulse anzupassen, die wiederum der Belastung des Motors entsprechen. Die Rückschlagklappen 38 und 70 der beiden Ladeluftauslässe 52 und 54 können gegebenenfalls auch entfallen.

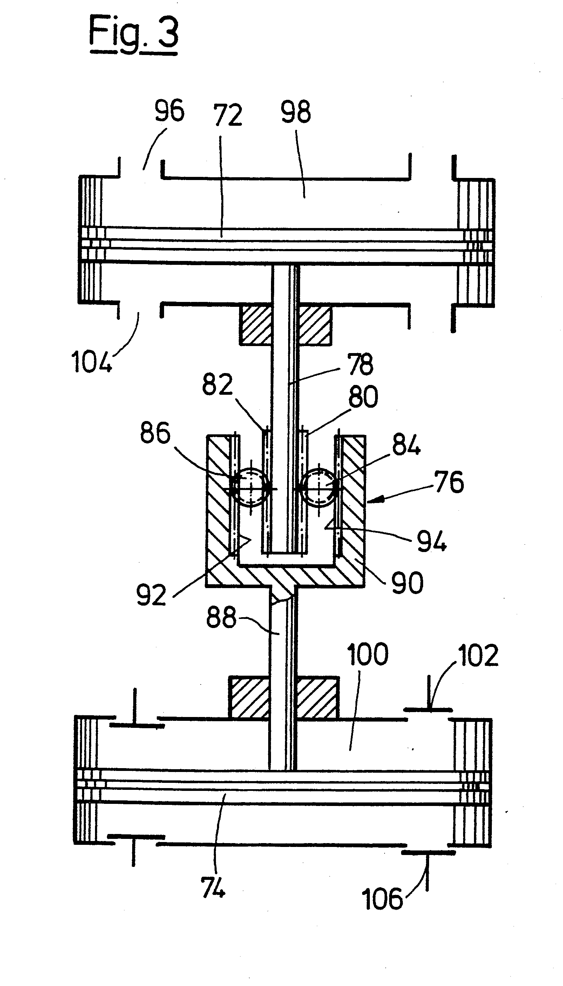

Die Fig. 3 zeigt eine Variante, bei der die beiden Trennwände 72 und 74 nicht starr zu einer gemeinsamen Bewegung miteinander verbunden sind. Die Trennwände 72 und 74 sind vielmehr durch eine insgesamt mit 76

0126462

bezeichneten Vorrichtung zur Bewegungsübertragung zu einer gegenläufigen Bewegung verbunden, wodurch Massenausgleich erreicht wird. Die Kolbenstange 78 der Trennwand 72 ist an zwei einander gegenüberliegenden Seiten mit einer Zahnstangenverzahnung 80 und 82 versehen. Mit jeder der Verzahnungen 80 und 82 steht ein ortsfestes Ritzel 84 bzw. 86 in Eingriff. Die Kolbenstange 88 der Trennwand 74 besitzt ein gabelförmiges Ende 90, wobei die beiden einander zugewandten Gabelflanken jeweils eine Zahnstangenverzahnung 92 bzw. 94 aufweisen, die mit dem Ritzel 84 bzw. dem Ritzel 86 in Eingriff stehen.

Wird die Trennwand 72 über den Abgaseinlaß 96 der Abgaskammer 98 mit Abgas beaufschlagt und in Fig. 3 abwärts bewegt, wird zugleich die Trennwand 74 in der Ladeluftkammer 100 aufwärts bewegt und verdrängt die Ladeluft durch den Ladeluftauslaß 102. Anschließend bewegt der Abgasimpuls durch den Abgaseinlaß 104 die Trennwand 72 aufwärts und die Trennwand 74 abwärts, wodurch die Ladeluft durch den Ladeluftauslaß 106 verdrängt wird. .

Die mechanische Vorrichtung 76 ist lediglich beispielsweise dargestellt, sie kann z. B. auch durch eine hydraulische Vorrichtung zur Bewegungsübertragung ersetzt werden.

- 12 -

0126462

Die Bewegung der gemeinsamer Bewegung verbundenen Trennwände kann durch Federelemente 35 in Fig. 2 und/oder Dämpfungselemente beeinflußt werden, die z. B. auf die Verbindungsstange 42 oder 36 wirken.

Hierdurch kann z. B. eine bevorzugte Ruhestellung in den beiden Endlagen der Trennwände bewirkt werden und/oder eine Bewegungsdämpfung bei Annäherung der Trennwände an diese Endlagen. Das oder die Federelemente können auch so ausgebildet sein, daß sie eine automatische Anpassung des Laderhubs bzw. der Luftfördermenge an die durch die Intensität der Abgasimpulse angezeigte Belastung des Motors bewirken.

- 1 -

0126462

Patentansprüche:

1. Verdrängerlader für die Verdichtung von Luft durch die Abgase eines Verbrennungsmotors, insbesondere eines Kolbenmotors, mit mindestens je einer in ihrem Volumen durch eine sie begrenzende, bewegliche Trennwand veränderbaren, jeweils einen Ein- und einen Auslaß aufweisende Abgaskammer und Luftkammer, dadurch gekennzeichnet, daß er zwei zu gemeinsamer Bewegung verbundene Trennwände (26, 38, 26a, 38a, 72, 74) aufweist.

2. Verdrängerlader nach Anspruch 1, dadurch gekennzeichnet, daß der Lader zwei Abgaskammern (22, 24) aufweist, die zu beiden Seiten einer Trennwand (22) angeordnet sind.

3. Verdrängerlader nach einem der vorhergehenden Ansprüche, dadurch gekennzeichnet, daß die Trennwände (26, 38, 26a, 38a, 72, 74) mit einer aus den Kammern (22, 24, 40, 42) herausgeführten Führungsstange (36) versehen sind, die außerhalb der Kammern (22, 24, 40, 42) in der Bewegungsrichtung der Trennwände (26, 28, 26a, 38a, 72, 74) geführt ist, wobei Führungsspiel und Führungslänge so bemessen sind, daß eine als Kolben ausgebildete Trennwand (26, 38, 26a, 38a, 72, 74) berührungsfrei in der ihr zugeordneten Kammer (22, 24, 40, 42) bewegbar ist.

0126462

4. Verdrängerlader nach einem der vorhergehenden Ansprüche, dadurch gekennzeichnet, daß jede Trennwand (120) mindestens je einen jeder Stirnfläche zugewandten Dichtungsabschnitt aufweist und der Bereich (122) zwischen den der einen und der anderen Stirnwand zugewandten Dichtungsabschnitten nach der Atmosphäre hin geöffnet ist.

5. Verdrängerlader nach einem der vorhergehenden Ansprüche, dadurch gekennzeichnet, daß die zu gemeinsamer Bewegung miteinander verbundenen Trennwände (26, 38, 26a, 38a) fest miteinander verbunden sind.

6. Verdrängerlader nach einem der Ansprüche 1 bis 4, dadurch gekennzeichnet, daß die zu gemeinsamer Bewegung miteinander verbundenen Trennwände (72, 74) durch eine Synchronisationseinrichtung (76, 78) in ihrer Bewegung aufeinander abgestimmt sind.

7. Verdrängerlader nach Anspruch 6, dadurch gekennzeichnet, daß zwei zu gemeinsamer Bewegung miteinander verbundene Trennwände (72, 74) über eine Vorrichtung (76) miteinander verbunden sind, die geeignet ist, die Bewegung der einen Trennwand (72, 74) jeweils gegenläufig auf die andere Trennwand (74, 72) zu übertragen.

0126462

8. Verdrängerlader nach Anspruch 7, dadurch gekennzeichnet, daß die Vorrichtung (76) zur Bewegungsübertragung mechanisch ausgebildet ist.

9. Verdrängerlader nach Anspruch 6, dadurch gekennzeichnet, daß die Vorrichtung zur Bewegungsübertragung für hydraulische Betätigung ausgebildet ist.

10. Verdrängerlader nach einem der vorhergehenden Ansprüche, dadurch gekennzeichnet, daß der Lader zwei Abgaskammern und zwei Ladeluftkammern aufweist, wobei der Auslaß der ersten Ladeluftkammer über einen Kühler mit dem Einlaß der zweiten Ladeluftkammer und deren Auslaß mit dem Einlaß des zu ladenden Motorzylinders verbunden ist.

11. Verdrängerlader nach einem der vorhergehenden Ansprüche, dadurch gekennzeichnet, daß jedem Abgasauslaß (32, 34) des Laders (10) eine Drossel zugeordnet ist.

12. Verdrängerlader nach Anspruch 11, dadurch gekennzeichnet, daß die Drossel hinsichtlich Druck und/oder Dauer der Drosselung einstellbar ist.

13. Verdrängerlader nach einem der Ansprüche 1 bis 10, dadurch gekennzeichnet, daß jedem Abgasaus-

- 4 -

0126462

(32, 34) oder Einlaß (28, 30) des Laders (10) ein steuerbares Ventil zugeordnet ist.

14. Verdrängerlader nach einem der Ansprüche 1 bis 10, dadurch gekennzeichnet, daß dem Lader (10) abgasseitig ein Abgassammler und seinen Abgaseinlässen (28, 30) eine Taktsteuerung zugeordnet ist.

15. Verdrängerlader nach einem der vorhergehenden Ansprüche dadurch gekennzeichnet, daß die zu gemeinsamer Bewegung verbundenen Trennwände durch Feder- und/oder Dämpfungselemente bevorzugt in mindestens eine charakteristische Lage bewegt und/oder ihre Bewegung bei Annäherung an diese charakteristische Lage(n) gedämpft wird.

16. Verdrängerlader nach Anspruch 15, dadurch gekennzeichnet, daß die charakteristische Lagen die beiden Endpositionen für die Hubbewegung der Trennwände sind.

17. Verdrängerlader nach Anspruch 15 dadurch gekennzeichnet, daß die charakteristische Lage die Mitte zwischen den beiden Endpositionen für die Hubbewegung der Trennwände ist.

Fig. 1

0126462

## Fig. 2

0126462

# Fig. 3

# 0126462

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A- 638 923  (CROSSLEY)  <br><br> * Seite 2, Zeile 48 - Seite 3, Zeile 26; Figuren 1-5 * | 1,2,5, 15-17 | F 02 B  37/00 <br> F 02 B  41/06 |
| Y | | 3 | |
| A | | 10 | |
| | --- | | |
| Y | DE-A-1 403 763  (ENDRES) <br> * Seite 2, Zeilen 3-7; Figur 1 * | 3 | |
| | --- | | |
| X | GB-A- 815 494  (CROSSLEY) <br><br> * Seite 2, Zeilen 19-62; Figuren 4-8 * | 1,5,13 -16 | |
| | --- | | RECHERCHIERTE SACHGEBIETE (Int. Cl. 3) |
| A | FR-A-1 221 170  (SULZER) <br> * Seite 2, Absatz 7 - Seite 3, Absatz 1; Figur 1 * | 3,4 | F 02 B <br> F 01 N <br> F 04 B <br> F 01 B |
| | --- | | |
| A | FR-A-2 423 637  (BRAUN) <br> * Seite 2, Zeile 22 - Seite 3, Zeile 25; Figuren 1,2 * | 6,7,8 | |
| | ----- | | |

Der vorliegende Recherchenbericht wurde für alle Patentansprüche erstellt.

| Recherchenort <br> DEN HAAG | Abschlußdatum der Recherche <br> 21-08-1984 | Prüfer <br> HAKHVERDI M. |
|---|---|---|